# FASCICULE DE BREVET EUROPEEN

(11) **EP 3 781 527 B1**
(45) Date de publication et mention de la délivrance du brevet: **31.12.2025**
(21) Numéro de dépôt: 19722670.7
(22) Date de dépôt: 12.04.2019
(51) Int. Cl.: C03B 23/025

(54) **SUPPORT DE BOMBAGE GRAVITAIRE DU VERRE**
STÜTZE ZUM SCHWERKRAFTBIEGEN VON GLAS
SUPPORT FOR GRAVITY BENDING OF GLASS

(30) Priorité: 16.04.2018 FR 1853308
(43) Date de publication de la demande: 24.02.2021
(73) Titulaire: Saint-Gobain Sekurit France, 60150 Thourotte (FR)
(72) Inventeur: DIOP, Aliou, 60350 JAULZY (FR); RUGGIERO, Luigi, 80069 VICO EQUENSE (NAPOLI) (IT); CAVALIERE, Michele, 84084 FISCIANO (SALERNO) (IT); CALIFANO, Antonio, 84014 NOCERA INFERIORE (IT)
(74) Mandataire: Saint-Gobain Recherche
(86) Numéro de dépôt international: PCT/FR2019/050867
(87) Numéro de publication internationale: WO 2019/202242

(56) Documents cités:
- EP-A2- 0 338 216
- US-A- 2 993 303
- US-A- 3 227 538
- US-A- 4 119 424
- US-A- 5 591 245
- US-A- 6 076 373

## Description

L'invention concerne le domaine des supports de bombage thermique du verre, plus particulièrement de verre de grande dimension et présentant de fortes courbures.

Le bombage par gravité de verres de grande dimension et aux fortes courbures sur des cadres notamment du type squelette se heurte à la difficulté de ce qu'en début de bombage, le verre non encore courbé déborde fortement du cadre vers l'extérieur. En conséquence, dès que le verre commence à se ramollir sous l'effet de la chaleur, la partie du verre débordant du cadre tend à s'effondrer vers l'extérieur en prenant une courbure opposée à celle finalement souhaitée. Or pendant le bombage, le bord du verre doit glisser sur le cadre vers l'intérieur pour qu'en fin de bombage ce bord se trouve en position correcte sur le cadre, quelques millimètres dépassant habituellement du cadre pour favoriser la formation de contraintes permanentes de compression de bord. Cependant, la partie du verre un peu effondrée à l'extérieur du cadre freine ce glissement. En conséquence, le temps de cycle est augmenté et le risque d'apparition de déformations incontrôlées est plus grand. Par ailleurs, le verre peut se trouver insuffisamment bombé, voire plat, ou même irrégulièrement bombé, en périphérie, conduisant à une forme périphérique hors tolérance.

Dans la présente demande, le verre est sous la forme d'une seule feuille ou plus généralement sous la forme d'un empilement de plusieurs feuilles, plus généralement encore, un empilement de deux feuilles. Afin de simplifier la description de l'invention, on parle simplement de « verre » pour désigner une feuille ou un empilement de feuilles. Qu'il s'agisse d'une seule feuille ou de plusieurs feuilles superposées, le verre comprend deux faces principales externes, appelées ici première face principale et seconde face principale, le bombage gravitaire étant effectué sur un support gravitaire par support du verre sur sa première face principale, laquelle est tournée vers le bas. Dans le cas d'un empilement, les feuilles restent empilées pendant tout le processus de bombage et de refroidissement, afin de garantir un formage identique de toutes les feuilles destinées à être assemblées dans un vitrage final. L'association de ces feuilles de verre dans le vitrage feuilleté final est ainsi réalisée dans de meilleures conditions, menant à un vitrage feuilleté de meilleure qualité.

Le verre bombé selon l'invention est notamment destiné à équiper les véhicules, notamment les véhicules routiers comme les automobiles, les camions et surtout les bus ou autocars qui utilisent des pare-brises particulièrement grands. Généralement, le verre est monté sur le véhicule sous la forme d'un vitrage feuilleté associant plusieurs feuilles de verre séparées par un matériau polymère notamment du type PVB. De préférence, toutes les feuilles de verre destinées à être associées dans un même exemplaire d'un vitrage feuilleté sont bombées ensemble à l'état empilé pour que leurs formes soient le plus identiques possible.

Dans le cadre de la présente demande, les valeurs de contraintes de bord en compression sont déterminées par un appareil Sharples commercialisé par la société Sharples Stress Engineers.

Des dispositifs de bombage du verre par gravité sont notamment enseignés par EP338216, US2993303, US4626267, US5167689, US5660609, US9771296, US3227538, US6076373, EP0338216.

L'invention concerne un dispositif pour le bombage par gravité d'une feuille de verre ou d'un empilement de feuilles de verre, dit le verre, comprenant un cadre, dit cadre support, et une extension extérieure à au moins une portion dudit cadre support, ladite portion étendue, ladite extension comprenant une piste de contact pour le verre, ladite extension étant apte à laisser un accès de l'air ambiant à au moins une partie de la zone périphérique extérieure au cadre support de la face inférieure du verre située vis-à-vis de la portion étendue dudit cadre support lorsque le verre est dans sa forme bombée finale, l'extension étant mobile ou amovible, ladite extension étant jointive au cadre support pendant au moins une partie du bombage et étant écartée du cadre support pendant au moins une partie du refroidissement afin de laisser un espace entre le cadre support et l'extension.

On cherche en effet à ce que le bord du verre déborde du cadre le portant en fin de bombage et pendant le refroidissement menant au figeage du verre, afin que ce bord se refroidisse plus rapidement que le verre directement au-dessus du cadre et prenne en conséquence des contraintes de compression de bord plus forte. Cette partie du verre débordant du cadre support est la zone périphérique extérieure à ce cadre. On donne un accès à toute cette zone périphérique ou seulement à une partie de cette zone par le biais d'orifices dans l'extension par exemple. Avantageusement, le bord du verre déborde du cadre support de 2 à 15 mm dans sa forme bombée finale (à la fin du bombage), et ce, pour une portion étendue de cadre ou une portion non étendue de cadre.

Dans sa forme bombée finale, le verre repose sur tout le pourtour du cadre support. L'extension n'est pas nécessairement présente en face de tout le pourtour du cadre support, mais pour au moins une portion de ce pourtour, dite « portion étendue ». Cette extension venant prolonger le cadre support vers l'extérieur de ce cadre soutient le verre pour éviter son affaissement et comprend donc une piste de contact pour venir au contact du verre.

L'extension selon l'invention prolonge le cadre support vers l'extérieur et présente donc des courbures prolongeant celles du cadre support, qu'il s'agisse des courbures parallèles ou radiales par rapport au cadre. De même, afin de jouer son rôle de prolongation, la piste de contact de l'extension est à la hauteur de la piste de contact du cadre support. **Il** n'y a donc pas de marche quand on passe de l'une à l'autre.

Le dispositif selon l'invention comprend un support gravitaire ayant la forme d'un cadre, dit cadre support, lequel supporte la périphérie du verre en fin de bombage et au moins pour une partie du refroidissement, au moins pendant le figeage du verre. Ce cadre support est de préférence revêtu d'un matériau fibreux réfractaire comme un tricot métallique, bien connu de l'homme du métier pour venir au contact du verre. Ce matériau fibreux forme une sorte de matelas adoucissant le contact de l'outil avec le verre et joue de plus un rôle d'isolant thermique. Dans le cas de la présence d'un tel matériau, la piste de contact pour le verre du cadre support est constituée du matériau réfractaire. Hors l'extension faisant l'objet de l'invention, la largeur de la piste de contact du cadre support avec le verre est généralement comprise dans le domaine allant de 3 à 20 mm. L'extension ajoute à la piste de contact du cadre support une piste de contact s'étendant à l'extérieur du cadre support d'une distance d comprise entre 5 et 50 mm. Ces largeurs de piste de contact sont données en vision perpendiculaire à la piste de contact.

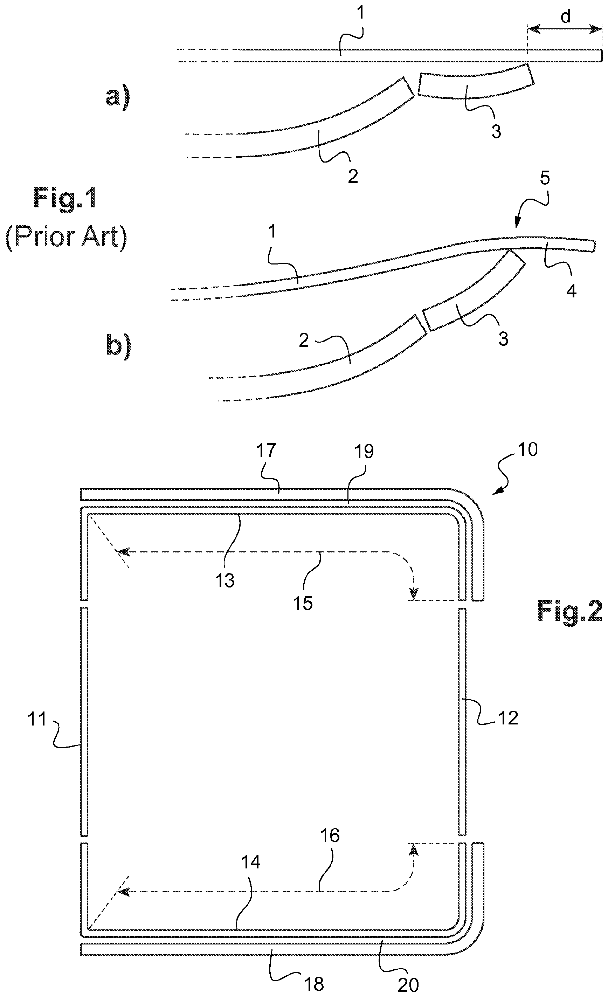

Le bombage gravitaire peut le cas échéant être assisté par la poussée d'une contre-forme appuyant sur la face supérieure du verre de façon similaire à l'enseignement du EP640569A1 (voir sa figure 2). Généralement cependant, aucun outil ne vient toucher la face supérieure du verre, ni sa tranche pendant le bombage. Que l'on fasse usage d'une contre-forme supérieure ou non pour le bombage, aucun outil ne vient toucher la face supérieure du verre dans sa zone périphérique et même en aucun endroit de cette face supérieure, ni sa tranche, au moins dès le début du refroidissement et jusqu'au figeage du verre.

Afin que les contraintes de compression de bord se forment au niveau exigé, l'extension laisse un accès de l'air ambiant à au moins une partie, voire la totalité de la périphérie de la face inférieure du verre au moins pendant une partie du refroidissement correspondant à la période pendant laquelle le verre se fige. C'est en effet pendant le figeage du verre que les contraintes permanentes de compression et d'extension s'établissent. De la sorte, la zone périphérique subit le refroidissement apte à lui donner les contraintes de bord souhaitées, notamment au moins 4 MPa, de préférence au moins 8 MPa. L'extension selon l'invention laisse un accès de l'air ambiant à au moins une partie, voire la totalité de la périphérie de la face inférieure du verre. On parle ici de la périphérie du verre aux endroits où se trouvent une extension, c'est-à-dire la ou les « portions étendues » du cadre support. En effet, l'extension n'équipe généralement pas la totalité du cadre mais seulement les portions correspondant aux plus grands glissements du verre sur le cadre pendant le bombage.

Notamment, l'accès de l'air ambiant à la périphérie de la face inférieure du verre peut être permis par un espace entre le cadre support et l'extension. Dans ce cas, pendant le bombage, le verre glisse sur l'extension et le bord du verre se retrouve en fin de bombage au-dessus de l'espace entre le cadre et l'extension. Dans ce cas, de préférence, le verre finalement bombé et débordant du cadre ne touche plus l'extension. Dans ce cas, l'air ambiant a un accès à 100% de la zone périphérique de la face inférieure du verre se trouvant à l'extérieur du cadre support, qu'il s'agisse ou non d'une « portion étendue ». L'espace entre le cadre et l'extension peut être compris dans le domaine allant de 2 à 20 mm, de préférence de 3 à 15 mm. Dans un mode de réalisation ne faisant pas partie de l'invention, l'extension peut être fixe par rapport au cadre et notamment reliée de façon fixe au cadre, auquel cas un espace entre le cadre et l'extension est constant.

Il peut ne pas y avoir d'espace entre l'extension et le cadre, mais alors des orifices existent dans l'extension pour permettre l'accès de l'air ambiant à au moins une partie de la périphérie de la face inférieure du verre, extérieurement au cadre support. Cette partie du verre est celle se trouvant au-dessus des orifices. De préférence, les orifices laissent un accès à l'air ambiant pour au moins 30% et même au moins 50% et même au moins 80%, voire plus, de la zone périphérique de la face inférieure du verre se trouvant à l'extérieur du cadre support.

Avec ou sans orifices, l'extension est mobile ou amovible (par rapport à la portion étendue du cadre support qu'elle étend) de sorte à laisser un accès de l'air ambiant à au moins une partie de la périphérie de la face inférieure du verre pendant au moins une partie du refroidissement. Notamment, l'extension est jointive au cadre pendant au moins une partie du bombage puis s'écarter du cadre d'une distance adaptée afin de laisser un espace entre le cadre et l'extension pendant au moins une partie du refroidissement. Dans le cas d'une extension amovible, l'extension est jointive au cadre pendant au moins une partie du bombage puis s'escamoter de sorte à ne plus être présente au voisinage du cadre pendant au moins une partie du refroidissement. L'extension amovible est escamotée de préférence après le début du refroidissement de sorte à être suffisamment éloignée du bord du verre pour ne plus influencer la formation des contraintes à l'intérieur du verre pendant son figeage. Ainsi, dans le cas d'une extension mobile ou amovible, l'extension est jointive au cadre support pendant le bombage et est écartée du cadre support pendant au moins une partie du refroidissement afin de laisser un espace entre le cadre support et l'extension. Notamment, l'extension est avantageusement escamotée après le début du refroidissement.

Pour le cas où l'extension n'est pas amovible et reste vis-à-vis de sa portion étendue de cadre support, l'extension est de préférence de faible épaisseur de façon à ce qu'elle ait le moins d'influence possible sur la température de l'air environnant le bord du verre pendant le refroidissement. Elle a donc la plus faible épaisseur possible tout en ayant suffisamment de rigidité pour ne pas se déformer au contact du verre. Par exemple, cette extension peut avoir une épaisseur comprise dans le domaine allant de 1,5 mm à 4 mm.

Le cadre muni de l'extension peut être le seul support venant au contact du verre pendant le bombage et au moins la partie du refroidissement de figeage du verre. Ce cadre peut être fixe, c'est-à-dire sans articulation. Le cadre peut être muni d'articulations. Dans ce cas, le cadre comprend une ou deux articulations se relevant au cours du bombage. Un côté du cadre se relevant par une articulation donne plus de courbures au verre et notamment sa flèche. C'est donc un côté correspondant à un bord longitudinal du verre, le verre prenant ses courbures transversales entre ses deux bords longitudinaux, par un bombage transversal.

Le cadre support supporte généralement le verre en fin de bombage et pendant le début du refroidissement du verre, de sorte qu'il donne au verre sa forme finale. C'est pourquoi, on peut également appeler le cadre support selon l'invention « cadre finisseur » car le bombage se finit généralement sur lui. En plus de ce cadre support, le dispositif selon l'invention peut également comprendre d'autres éléments de supportage du verre intervenant généralement en début de bombage. En effet, dans le cas de courbures complexes, il est recommandé d'accentuer les courbures du dispositif de bombage par gravité au cours même du bombage afin que celui-ci soit plus progressif, ce qui diminue le risque de contre-bombage (courbures inverses à celles désirées dans les coins). Pour ce faire, on fait appel à des dispositifs comprenant des parties mobiles au cours du bombage.

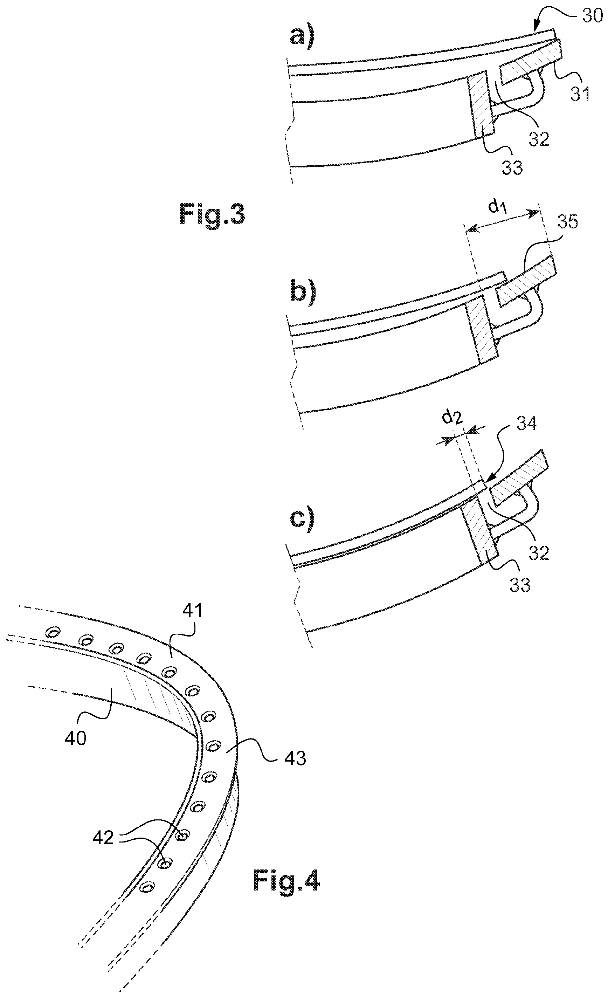

Notamment, le dispositif selon l'invention peut être conforme à l'une des configurations suivantes :
A) le cadre support peut comprendre une ou deux parties articulées pouvant se relever au cours du bombage. Le cadre support comprend alors des parties supportant le verre en début de bombage, dites « parties d'ébauche », lesquelles sont remplacées en cours de bombage par des « parties articulées ». Les parties articulées ont des pistes de contact plus courbées que les parties d'ébauche. Des parties fixes du cadre support peuvent venir au contact du verre indépendamment de l'état relevé ou non des parties articulées. Un tel support a donc une forme ébauche recevant le verre à l'état plat et le supportant en début de bombage, et une forme finale supportant le verre en fin de bombage. Le principe de ce genre de support à géométrie variable pour une partie de ses pistes de contact mais comprenant des pistes de contact fixes servant à la fois à l'ébauche et au finissage du bombage est enseigné notamment par les figures 3 à 6 du EP448447A1 ; l'extension selon l'invention est plutôt destinée à équiper les parties articulées de ce type de dispositif.
B) en plus du cadre support, le dispositif selon l'invention peut comprendre un cadre dit cadre ébaucheur non-articulé supportant le verre en début de bombage ; le cadre support aux courbures plus prononcées vient remplacer ce cadre ébaucheur au cours du bombage ; le cadre support joue ici le rôle d'un cadre finisseur car il est au contact du verre en fin de bombage ; ces deux cadres sont distincts l'un de l'autre, c'est-à-dire qu'ils ne comprennent pas de piste de contact commune au cadre support et au cadre ébaucheur ; le principe de ce genre de double cadre supportant le verre l'un après l'autre est enseigné notamment par les figures 1 à 4 du EP705798A1 ; l'extension selon l'invention est plutôt destinée à équiper au moins les parties du cadre support donnant sa flèche au verre;
C) en plus du cadre support, le dispositif selon l'invention peut comprendre un cadre dit cadre ébaucheur non-articulé supportant le verre en début de bombage ; un cadre support comprenant au moins une partie articulée vient remplacer ce cadre ébaucheur pour le verre au cours du bombage, sa ou ses parties articulées se relevant au cours du bombage ; le cadre support joue ici le rôle d'un cadre finisseur car il est au contact du verre en fin de bombage ; le principe de ce genre de double cadre supportant le verre l'un après l'autre, le cadre support comprenant au moins une partie articulée est enseigné notamment par la figure 8 de WO2004/103922A1 ; l'extension selon l'invention est destinée à équiper les parties articulées du cadre support ;
D) en plus du cadre support, le dispositif selon l'invention peut comprendre un cadre dit cadre finisseur articulé ou non-articulé supportant le verre en fin de bombage ; le cadre support aux courbures moins prononcées supporte le verre au début du bombage avant le cadre finisseur, ce dernier venant le remplacer au cours du bombage ; ces deux cadres sont distincts l'un de l'autre, c'est-à-dire qu'ils ne comprennent pas de piste de contact commune au cadre support et au cadre finisseur ; le principe de ce genre de double cadre supportant le verre l'un après l'autre est enseigné notamment par les figures 1 à 4 du EP705798A1 ; dans cette variante, l'extension selon l'invention équipe au moins une partie de la zone périphérique extérieure au cadre support, lequel joue ici le rôle d'un cadre ébaucheur; dans cette variante, ce cadre support entoure généralement le cadre finisseur vue de dessus.

Dans les variantes B), C), et D) les deux cadres sont aptes à être animés d'un mouvement vertical relatif pour faire passer le verre du cadre ébaucheur au cadre finisseur.

Dans toutes les variantes, la piste de contact de l'extension est de préférence à la hauteur de la piste de contact du cadre support au moins à la fin du glissement du verre sur l'extension. Ainsi, si l'extension est mobile ou amovible, l'extension est à la hauteur de la piste de contact du cadre support lorsque l'extension est en position jointive au cadre.

Lorsque le dispositif selon l'invention comprend un support comprenant au moins une partie articulée, le relèvement de l'articulation peut généralement se faire automatiquement sous l'effet du ramollissement du verre. Ce genre de support comprend un système de contrepoids réglé pour que le relèvement de l'articulation ne nécessite pas une grande force. Ainsi, quand le verre non encore fortement bombé repose sur ce support, le système de contrepoids est réglé pour que la partie articulée se baisse sous l'effet du poids du verre. Ensuite, pendant le ramollissement et l'effondrement du verre au cours du bombage, cette partie articulée vient à remonter. On peut retenir le relèvement de la partie articulée par un système de blocage et déblocage commandé de l'extérieur du dispositif, notamment comme enseigné par EP448447. On peut également ralentir le relèvement de la partie articulée par une chaîne commandée ou tout autre lien souple ou rigide par l'extérieur du dispositif, la chaîne imposant une vitesse de remonté de la partie articulée. Un dispositif préféré selon l'invention est du type C), le cadre support articulé entourant le cadre ébaucheur en vue de dessus.

Ainsi, le dispositif selon l'invention peut comprendre un cadre ébaucheur pour supporter le verre en début de bombage, le cadre ébaucheur et le cadre support étant aptes à être animés d'un mouvement vertical relatif pour faire passer le verre du cadre ébaucheur au cadre support. Le cadre ébaucheur supporte le plus gros poids du verre voire tout le poids du verre en début de bombage, alors qu'en fin de bombage, le cadre support supporte le plus gros poids du verre voire tout le poids du verre. De préférence, le cadre support entoure le cadre ébaucheur vue de dessus. Le verre déborde du cadre ébaucheur de sorte que lors du mouvement vertical relatif, le cadre support prend en charge le verre par cette partie dépassant du cadre ébaucheur. Le cadre support peut être articulé et comprendre alors une ou deux parties articulées aptes à se relever au cours du bombage. Généralement, l'extension équipe une ou deux des parties articulées.

L'invention concerne également un procédé de fabrication de verre bombé comprenant le bombage par gravité d'une feuille de verre ou d'un empilement de feuilles de verre, dit le verre, sur le dispositif de l'une des revendications précédentes, le verre glissant sur l'extension au cours du bombage et l'extension étant mobile ou amovible, ladite extension étant jointive au cadre support pendant au moins une partie du bombage et étant écartée du cadre support pendant au moins une partie du refroidissement afin de laisser un espace entre le cadre support et l'extension.

Le verre réalisé grâce au dispositif de l'invention est généralement bombé selon deux directions orthogonales entre elles et possède donc deux profondeurs de bombage. Ce type de bombage est dit bombage complexe, parfois sphérique, par opposition au bombage cylindrique selon lequel le verre n'est bombé que dans une direction. Le verre bombé selon l'invention possède généralement un plan de symétrie lui étant perpendiculaire et passant par le milieu de deux de ses côtés (également appelés « bandes »), généralement ses côtés dit transversaux, c'est-à-dire ceux sensiblement horizontaux lorsque le verre est monté sur le véhicule. La profondeur du bombage transversal est appelé « flèche » et la profondeur du bombage longitudinal est appelée « double-bombage ». Le bombage transversal est celui donnant des courbures transversales entre des côtés longitudinaux du verre, c'est-à-dire des courbures sensiblement horizontales lorsqu'on regarde le véhicule de face, le verre étant monté sur le véhicule. Le bombage longitudinal est celui donnant des courbures longitudinales entre des côtés transversaux du verre, c'est-à-dire des courbures sensiblement verticales lorsqu'on regarde le véhicule de face, le verre étant monté sur le véhicule. Le WO2010136702 enseigne, notamment par ses figures 1a et 1b comment sont déterminés la « flèche » et le « double-bombage » et l'on utilise dans le cadre de la présente demande les mêmes définitions.

Les verres comprennent généralement globalement quatre côtés (également appelés « bandes »), deux de ces côtés étant les côtés longitudinaux, lesquels apparaissent sensiblement verticaux lorsqu'on regarde le véhicule sur lequel il est monté de face, les deux autres étant les côtés transversaux, lesquels apparaissent sensiblement horizontaux lorsqu'on regarde le véhicule sur lequel il est monté de face.

Le verre concerné par la présente invention est généralement de grande dimension. L'invention s'adresse plus particulièrement aux verres dont au moins une dimension de face principale à l'état plat avant bombage est supérieure à 2000 mm et même supérieure à 2400 mm. L'extension selon l'invention supporte au moins un des bords, sensiblement orthogonal à cette grande dimension.

Le verre plat utilisé avant bombage peut notamment avoir une plus grande dimension de face principale supérieure à 2400 mm et une plus petite dimension de face principale supérieure à 1600 mm. Le verre final bombé peut avoir en projection sur un plan une plus grande dimension de face principale supérieure à 2200 mm et une plus petite dimension de face principale supérieure à 1500 mm. Le verre final bombé peut avoir une flèche supérieure à 250 mm, voire supérieure à 280 mm, voire supérieure à 300 mm. Le verre final bombé peut avoir un double-bombage supérieur à 80 mm, voire supérieur à 90 mm voire supérieur à 100 mm. Notamment, un verre ayant une flèche comprise entre 290 et 350 mm, combiné à un double-bombage compris entre 90 et 130 mm peut être réalisé.

Le verre comprend une ou plusieurs feuilles de verre empilées, l'épaisseur de chaque feuille de verre pouvant être comprise dans le domaine allant de 0,5 à 6 mm, notamment de 2,5 à 4,5 mm. Par exemple, deux ou trois feuilles de verre de ce type peuvent être bombées ensemble à l'état empilé.

Les figures commentées ci-après ne sont pas à l'échelle.

La figure 1 illustre un problème de l'art antérieur résolu par l'invention. On a représenté de façon schématique une partie d'un cadre articulé de bombage. Un verre 1 plat non encore bombé repose sur un dispositif de bombage comprenant un cadre comportant une partie fixe 2 et une partie articulée 3. Au début, le verre étant encore plan, il ne touche le cadre qu'en quelques points. Du fait de la forte concavité du verre final et de sa grande dimension, le verre déborde fortement d'une distance d du cadre. Au cours du bombage, le verre se ramollit et l'articulation se referme. Le verre doit glisser sur le cadre pour qu'à la fin du bombage quelques mm seulement du verre déborde du cadre. En b), le verre est en cours de bombage mais la partie 4 du verre débordant du cadre tend à s'affaisser vers le bas donnant au verre en 5 une courbure inverse à celle finalement recherchée.

La figure 2 représente en vue de dessus un cadre de bombage 10 comprenant deux parties fixes 11 et 12 et deux parties articulées 13 et 14. Deux portions 15 et 16, des parties articulées du cadre, dites portions étendues, sont munies d'extensions 17 et 18 selon l'invention. Ces extensions sont extérieures au cadre et situées vis-à-vis des portions étendues du cadre. Ces extensions sont fixées aux parties articulées en laissant un espace permanent (19, 20) entre le cadre et l'extension. Ces espaces permettent un accès de l'air ambiant à la périphérie de la face inférieure du verre située vis-à-vis des portions étendues du cadre, au moins pendant une partie du refroidissement.

La figure 3 illustre le glissement du bord 30 du verre sur une extension 31 selon un mode de réalisation ne faisant pas partie de l'invention pendant le bombage. L'extension 31 est du type de celle montrée à la figure 2, c'est-à-dire avec un espace 32 entre l'extension et la portion du cadre support 33 munie de l'extension 31. Cette portion du cadre support est sur une partie articulée, laquelle est abaissée en a) avant le commencement du bombage et en début de bombage, puis commence à se relever en b) alors que le verre est en cours de bombage et est complètement relevée en c). En fin de bombage en c), le bord 30 et même la tranche 34 du verre est au-dessus de l'espace 32 en débordant du cadre support 33 de la distance d2 comprise dans le domaine allant de 2 à 15 mm. L'air ambiant a donc un accès à la périphérie de la face inférieure du verre située vis-à-vis de la portion étendue du cadre 33. Le verre étant bombé avec cette position finale, le refroidissement occasionnera des contraintes permanentes de compression au bord du verre. La configuration en b) est intermédiaire à celle de a) et c). L'extension 31 ajoute à la piste de contact du cadre support 33 une piste de contact 35, laquelle s'étend à l'extérieur du cadre support d'une distance d1 comprise entre 5 et 50 mm.

La figure 4 illustre une portion de cadre étendue par une extension 41 selon un mode de réalisation ne faisant pas partie de l'invention.

Cette extension 41 est fixée au cadre 40 sans espace entre eux. L'extension comprend des orifices 42 afin de laisser un accès au moins partiel de l'air ambiant à la périphérie de la face inférieure du verre située vis-à-vis de la portion étendue du cadre. Comme il est important que cet accès de l'air ait lieu au moins pendant le refroidissement, le verre étant dans sa forme et position finale sur le cadre, les orifices 42 sont préférentiellement disposés près du cadre 40. La somme des aires des orifices représente de préférence au moins 30% et même au moins 50% et même au moins 80%, voire et plus, de la zone périphérique de la face inférieure du verre se trouvant à l'extérieur du cadre support. La partie 43 la plus extérieure de l'extension peut en effet être démunie d'orifices puisqu'elle ne supporte le verre qu'en début de bombage.

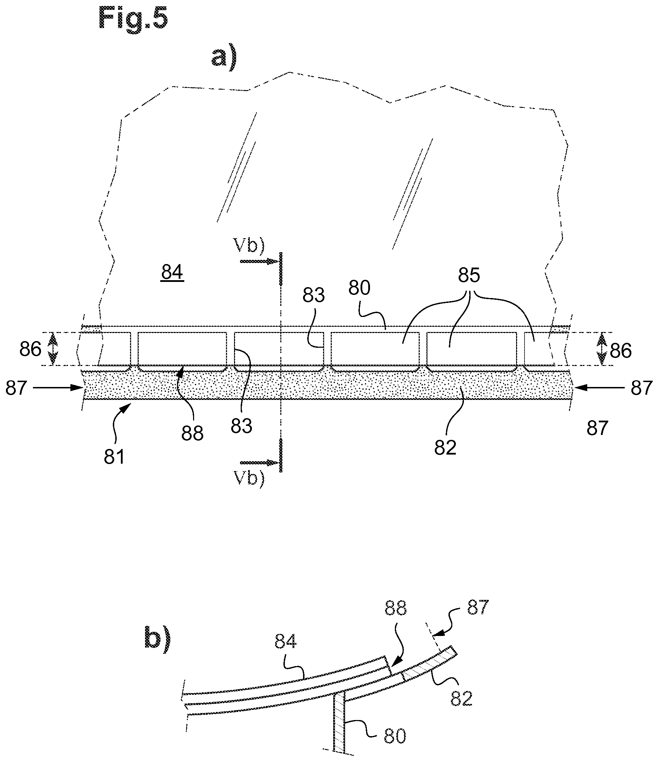

La figure 5 illustre en vue de dessus en a) et en coupe en vue de côté en b) (dans le plan de coupe Vb)-Vb) de la fig 5a) un verre 84 en fin de bombage ou au cours du refroidissement reposant sur un dispositif selon un mode de réalisation ne faisant pas partie de l'invention. Le verre a donc sa forme finale. Le dispositif comprend un cadre support 80 dont au moins une portion est étendue par une extension 81 selon l'invention. Cette extension comprend une bande 82, pleine, c'est-à-dire sans orifice, et dont la direction principale est parallèle au cadre 80, et des pattes 83 reliant la bande 82 au cadre support 80. On voit le cadre 80 et une partie des pattes 83 en transparence à travers le verre 84. Les espaces 85 entre les pattes 83 et entre le cadre support 80 et la bande 82 forment des orifices 85 laissant l'accès de l'air ambiant à au moins une partie de la zone périphérique 86 extérieure au cadre support 80 de la face inférieure du verre. En tout début de bombage, le bord 88 du verre se trouvait sur la bande 82 au niveau 87. Il a glissé sur la bande 82 et les pattes 83 pour se retrouver au-dessus des orifices 85 en fin de bombage.

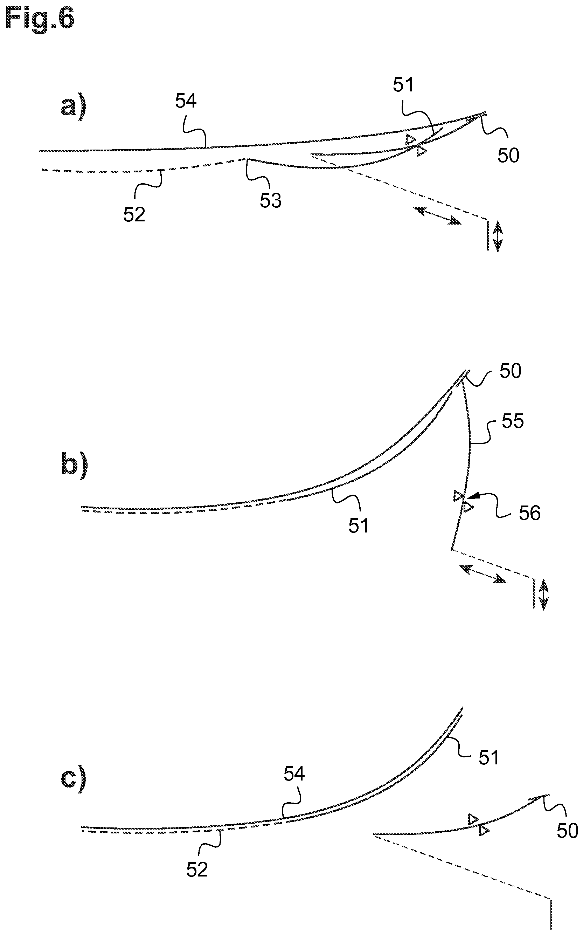

La figure 6 illustre schématiquement un dispositif selon l'invention selon lequel une extension 50 est amovible par rapport à la portion 51 de cadre support qu'elle étend, cette portion étant ici sur une partie articulée et reliée à une partie fixe 52 via une liaison pivot 53. En a), le verre 54 encore quasiment plat repose déjà sur l'extension 50 alors même que l'articulation 51 n'est pas encore relevée. Cela prévient dès le début du bombage tout affaissement du bord du verre à l'extérieur du cadre support. En b), on voit la suite de a) pendant le bombage, alors que l'articulation 51 est relevée. L'extension 50 a suivi l'articulation de façon à offrir au verre une continuité de forme de la portion 51 de la partie articulée. Cette mobilité de l'extension est rendue possible par le fait qu'elle soit fixée à un bras 55 lui-même mobile autour d'un pivot glissant 56. En c), alors que le refroidissement a commencé, l'extension 50 a été escamotée pour laisser un accès de l'air ambiant à la périphérie de la face inférieure du verre située vis-à-vis de la portion étendue du cadre, au moins pendant une partie du refroidissement. Dans ce mode de réalisation, on peut dire que l'extension sert à la fois d'ébaucheur (ou 3ème bande) et d'extension du cadre support. L'extension est ici en fait indépendante du cadre support. Le positionnement et l'escamotage de l'extension sont ici commandés au moins en partie de l'extérieur du dispositif.

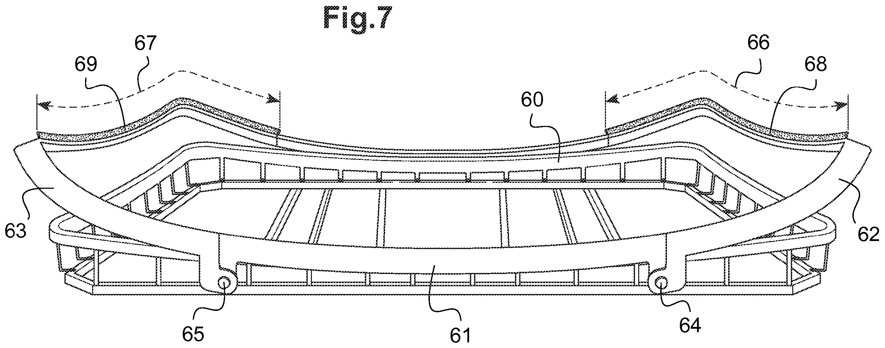

La figure 7 illustre schématiquement un dispositif selon un mode de réalisation ne faisant pas partie de l'invention comprenant un cadre ébaucheur 60 sur lequel le verre repose en début de bombage et un cadre support 61 sur lequel le verre repose en fin de bombage. Au cours du bombage, un mouvement vertical relatif entre le cadre ébaucheur et le cadre support fait passer le verre du cadre ébaucheur au cadre support. Au cours de ce passage et également après ce passage, les deux parties articulées 62 et 63 se relèvent au cours du bombage en pivotant autour de pivots 64 et 65. La représentation est schématique et bien entendu, les pivots 64 et 65 ne sont pas reliés au cadre ébaucheur 60. Le dispositif est représenté en position final en fin de bombage, le verre (non représenté) ne touchant alors plus le cadre ébaucheur 60. Deux portions 66 et 67 du cadre support sont munies au niveau de ses parties articulées 62 et 63 d'extension selon l'invention 68 et 69 munies d'orifices (non représentés) aptes à laisser un accès de l'air ambiant pour la formation des contraintes de bord lors du figeage du verre pendant son refroidissement.

## Revendications

1. Dispositif pour le bombage par gravité d'une feuille de verre ou d'un empilement de feuilles de verre, dit le verre, comprenant un cadre, dit cadre support, et une extension extérieure à au moins une portion dudit cadre support, dite portion étendue, ladite extension comprenant une piste de contact pour le verre, ladite extension étant apte à laisser un accès de l'air ambiant à au moins une partie de la zone périphérique extérieure au cadre support de la face inférieure du verre située vis-à-vis de la portion étendue dudit cadre support lorsque le verre est dans sa forme bombée finale, l'extension étant mobile ou amovible, ladite extension étant jointive au cadre support pendant au moins une partie du bombage et étant écartée du cadre support pendant au moins une partie du refroidissement afin de laisser un espace entre le cadre support et l'extension.

2. Dispositif selon la revendication précédente, **caractérisé en ce que** la piste de contact de l'extension est à la hauteur de la piste de contact du cadre support.

3. Dispositif selon l'une des revendications précédentes, **caractérisé en ce que** l'accès de l'air ambiant est permis par un espace entre le cadre support et l'extension.

4. Dispositif selon l'une des revendications précédentes, **caractérisé en ce que** l'accès de l'air ambiant est permis par des orifices dans l'extension.

5. Dispositif selon l'une des revendications précédentes, **caractérisé en ce que** le dispositif comprend un cadre ébaucheur pour supporter le verre en début de bombage, le cadre ébaucheur et le cadre support étant aptes à être animés d'un mouvement vertical relatif pour faire passer le verre du cadre ébaucheur au cadre support.

6. Dispositif selon la revendication précédente, **caractérisé en ce que** le cadre support entoure le cadre ébaucheur vue de dessus.

7. Dispositif selon l'une des revendications 1 à 4, **caractérisé en ce que** le dispositif comprend un cadre finisseur pour supporter le verre en fin de bombage, le cadre finisseur et le cadre support étant aptes à être animés d'un mouvement vertical relatif pour faire passer le verre du cadre support au cadre finisseur.

8. Dispositif selon la revendication précédente, **caractérisé en ce que** le cadre support entoure le cadre finisseur vue de dessus.

9. Dispositif selon l'une des revendications précédentes, **caractérisé en ce que** le cadre support est articulé et comprend une ou deux parties articulées aptes à se relever au cours du bombage.

10. Dispositif selon la revendication précédente, **caractérisé en ce que** l'extension équipe une ou deux des parties articulées.

11. Dispositif selon l'une des revendications précédentes, **caractérisé en ce que** l'extension a une épaisseur comprise dans le domaine allant de 1,5 mm à 4 mm.

12. Procédé de fabrication de verre bombé comprenant le bombage par gravité d'une feuille de verre ou d'un empilement de feuilles de verre, dit le verre, sur le dispositif de l'une des revendications précédentes, le verre glissant sur l'extension au cours du bombage et l'extension étant mobile ou amovible, ladite extension étant jointive au cadre support pendant au moins une partie du bombage et étant écartée du cadre support pendant au moins une partie du refroidissement afin de laisser un espace entre le cadre support et l'extension.

13. Procédé selon la revendication précédente, **caractérisé en ce que** le verre dans sa forme bombée finale déborde du cadre support de 2 à 15 mm.

14. Procédé selon l'une des revendications précédentes de procédé, **caractérisé en ce qu'**il comprend le refroidissement du verre sur le dispositif dans sa forme bombée finale pendant son figeage.

15. Procédé selon la revendication précédente, **caractérisé en ce que** le refroidissement procure au verre des contraintes de bord d'au moins 4 MPa, de préférence d'au moins 8 MPa.

16. Procédé selon l'une des revendications précédentes de procédé, **caractérisé en ce que** le verre comprend une ou plusieurs feuilles de verre, l'épaisseur de chaque feuille de verre étant comprise dans le domaine allant de 0,5 à 6 mm, notamment de 2,5 à 4,5 mm.

17. Procédé selon l'une des revendications précédentes de procédé, **caractérisé en ce que** le verre plat avant bombage a une plus grande dimension de face principale supérieure à 2400 mm et une plus petite dimension de face principale supérieure à 1600 mm.

18. Procédé selon l'une des revendications précédentes de procédé, **caractérisé en ce que** le verre final bombé a en projection sur un plan une plus grande dimension de face principale supérieure à 2200 mm et une plus petite dimension de face principale supérieure à 1500 mm.

19. Procédé selon l'une des revendications précédentes de procédé, **caractérisé en ce que** le verre final bombé a une flèche supérieure à 250 mm, voire supérieure à 280 mm, voire supérieure à 300 mm, et un double-bombage supérieur à 80 mm, voire supérieur à 90 mm voire supérieur à 100 mm.

20. Procédé selon la revendication précédente, **caractérisé en ce que** l'extension est escamotée après le début du refroidissement.

## Patentansprüche

1. Vorrichtung für das Biegen durch Schwerkraft einer Glasscheibe oder einer Stapelung von Glasscheiben, des sogenannten Glases, umfassend einen Rahmen, den sogenannten Trägerrahmen, und eine Erweiterung außerhalb mindestens eines Abschnitts des Trägerrahmens, der sogenannte erweiterte Abschnitt, die Erweiterung umfassend eine Kontaktbahn für das Glas, wobei die Erweiterung geeignet ist, einen Zugang von Umgebungsluft an mindestens einem Teil der Umfangszone außerhalb des Trägerrahmens der Unterseite des Glases zu belassen, der gegenüber des erweiterten Abschnitts des Trägerrahmens gelegen ist, wenn das Glas in seiner endgültigen gebogenen Form ist, wobei die Erweiterung beweglich oder abnehmbar ist, wobei die Erweiterung an dem Trägerrahmen während mindestens eines Teils des Biegens anliegt und von dem Trägerrahmen während mindestens eines Teils der Abkühlung beabstandet ist, um einen Raum zwischen dem Trägerrahmen und der Erweiterung zu belassen.

2. Vorrichtung nach dem vorstehenden Anspruch,
**dadurch gekennzeichnet, dass** die Kontaktbahn der Erweiterung auf der Höhe der Kontaktbahn des Trägerrahmens ist.

3. Vorrichtung nach einem der vorstehenden Ansprüche,
**dadurch gekennzeichnet, dass** der Zugang von Umgebungsluft durch einen Raum zwischen dem Trägerrahmen und der Erweiterung ermöglicht ist.

4. Vorrichtung nach einem der vorstehenden Ansprüche,
**dadurch gekennzeichnet, dass** der Zugang von Umgebungsluft durch Öffnungen in der Erweiterung ermöglicht ist.

5. Vorrichtung nach einem der vorstehenden Ansprüche,
**dadurch gekennzeichnet, dass** die Vorrichtung einen Vorrahmen zum Tragen des Glases zu Beginn des Biegens umfasst, wobei der Vorrahmen und der Trägerrahmen geeignet sind, in eine relative vertikale Bewegung gebracht zu werden, zum Durchziehen des Glases von dem Vorrahmen zu dem Trägerrahmen.

6. Vorrichtung nach dem vorstehenden Anspruch,
**dadurch gekennzeichnet, dass** der Trägerrahmen den Vorrahmen in der Draufsicht umgibt.

7. Vorrichtung nach einem der Ansprüche 1 bis 4,
**dadurch gekennzeichnet, dass** die Vorrichtung einen Endrahmen zum Tragen des Glases am Ende des Biegens umfasst, wobei Endrahmen und der Trägerrahmen geeignet sind, in eine relative vertikale Bewegung gebracht zu werden, zum Durchziehen des Glases von dem Trägerrahmen zu dem Endrahmen.

8. Vorrichtung nach dem vorstehenden Anspruch,
**dadurch gekennzeichnet, dass** der Trägerrahmen den Endrahmen in der Draufsicht umgibt.

9. Vorrichtung nach einem der vorstehenden Ansprüche,
**dadurch gekennzeichnet, dass** der Trägerrahmen gelenkig ist und ein oder zwei gelenkige Teile umfasst, die geeignet sind, sich im Lauf des Biegens wieder zu erheben.

10. Vorrichtung nach dem vorstehenden Anspruch,
**dadurch gekennzeichnet, dass** die Erweiterung in einem oder zwei der gelenkigen Teile eingebaut ist.

11. Verfahren nach einem der vorstehenden Ansprüche,
**dadurch gekennzeichnet, dass** die Erweiterung eine Dicke, die in dem Bereich von 1,5 mm bis 4 mm liegt, aufweist.

12. Verfahren zum Herstellen von gebogenem Glas, umfassend das Biegen durch Schwerkraft einer Glasscheibe oder einer Stapelung von Glasscheiben, des sogenannten Glases, auf der Vorrichtung nach einem der vorstehende Ansprüche, wobei das Gals auf die Erweiterung im Lauf des Biegens gleitet und die Erweiterung mobil oder abnehmbar ist, wobei die Erweiterung an dem Trägerrahmen während mindestens eines Teils des Biegens anliegt und von dem Trägerrahmen während mindestens eines Teils der Abkühlung beabstandet ist, um einen Raum zwischen dem Trägerrahmen und der Erweiterung zu belassen.

13. Verfahren nach dem vorstehenden Anspruch,
**dadurch gekennzeichnet, dass** das Glas in seiner endgültigen gebogenen Form aus dem Trägerrahmen um 2 bis 15 mm hinausragt.

14. Verfahren nach einem der vorstehenden Verfahrensansprüche,
**dadurch gekennzeichnet, dass** es die Abkühlung des Glases auf der Vorrichtung in seine endgültige gebogene Form während seines Erstarrens umfasst.

15. Verfahren nach dem vorstehenden Anspruch,
**dadurch gekennzeichnet, dass** die Abkühlung dem Glas Kantenspannungen von mindestens 4 MPa, vorzugsweise mindestens 8 MPa, verschafft.

16. Verfahren nach einem der vorstehenden Verfahrensansprüche,
**dadurch gekennzeichnet, dass** das Glas eine oder mehrere Glasscheiben umfasst, wobei die Dicke jeder Glasscheibe in dem Bereich von 0,5 bis 6 mm, insbesondere von 2,5 bis 4,5 mm liegt.

17. Verfahren nach einem der vorstehenden Verfahrensansprüche,
**dadurch gekennzeichnet, dass** das ebene Glas vor dem Biegen eine größere Hauptflächenabmessung von mehr als 2400 mm und eine kleinere Hauptflächenabmessung von mehr als 1600 mm aufweist.

18. Verfahren nach einem der vorstehenden Verfahrensansprüche,
**dadurch gekennzeichnet, dass** das endgültige gebogene Glas, bei Projektion auf eine Ebene, eine größere Hauptflächenabmessung von mehr als 2200 mm und eine kleinere Hauptflächenabmessung von mehr als 1500 mm aufweist.

19. Ein Verfahren nach einem der vorstehenden Verfahrensansprüche,
**dadurch gekennzeichnet, dass** das endgültige gebogene Glas eine Durchbiegung von mehr als 250 mm, sogar mehr als 280 mm, sogar mehr als 300 mm, und eine Doppelbiegung von mehr als 80 mm, sogar mehr als 90 mm, sogar mehr als 100 mm aufweist.

20. Verfahren nach dem vorstehenden Anspruch,
**dadurch gekennzeichnet, dass** die Erweiterung nach Beginn der Abkühlung eingefahren wird.

## Claims

1. A device for the gravity bending of a glass sheet or a stack of glass sheets, called the glass, comprising a frame, called the support frame, and an extension outside at least one portion of said support frame, called the extended portion, said extension comprising a contact track for the glass, said extension being capable of allowing access for ambient air to at least a part of the peripheral area outside the support frame for the lower face of the glass which is located facing the extended portion of said support frame when the glass is in its final bent shape, the extension being movable or removable, said extension being adjacent to the support frame during at least part of the bending process and being spaced apart from the support frame during at least part of the cooling process so as to leave a gap between the support frame and the extension.

2. The device as claimed in the preceding claim, **characterized in that** the contact track of the extension is at the height of the contact track of the support frame.

3. The device as claimed in any of the preceding claims, **characterized in that** the access for the ambient air is allowed by a space between the support frame and the extension.

4. The device as claimed in any of the preceding claims, **characterized in that** the access for the ambient air is allowed by openings in the extension.

5. The device as claimed in any of the preceding claims, **characterized in that** the device comprises an initial frame for supporting the glass at the start of bending, the initial frame and the support frame being drivable with a relative vertical movement to cause the glass to pass from the initial frame to the finishing frame.

6. The device as claimed in the preceding claim, **characterized in that** the support frame surrounds the initial frame in a top view.

7. The device as claimed in any of claims 1 to 4, **characterized in that** the device comprises a finishing frame for supporting the glass at the end of bending, the finishing frame and the support frame being drivable with a relative vertical movement to cause the glass to pass from the support frame to the finishing frame.

8. The device as claimed in the preceding claim, **characterized in that** the support frame surrounds the finishing frame in a top view.

9. The device as claimed in any of the preceding claims, **characterized in that** the support frame is hinged and comprises one or two hinged parts that can be raised in the course of the bending.

10. The device as claimed in the preceding claim, **characterized in that** the extension is fitted to one or two of the hinged parts.

11. The device as claimed in any of the preceding claims, **characterized in that** the extension has a thickness in the range from 1.5 mm to 4 mm.

12. A method of manufacturing bent glass comprising the gravity bending of a glass sheet or of a stack of glass sheets, called the glass, on the device as claimed in any of the preceding claims, the glass sliding on the extension in the course of bending and the extension being movable or removable, said extension being adjacent to the support frame during at least part of the bending process and being spaced apart from the support frame during at least part of the cooling process so as to leave a gap between the support frame and the extension.

13. The method as claimed in the preceding claim, **characterized in that** the glass in its final bent shape projects beyond the support frame by 2 to 15 mm.

14. The method as claimed in any of the preceding method claims, **characterized in that** it comprises the cooling of the glass on the device in its final bent shape during its setting.

15. The method as claimed in the preceding claim, **characterized in that** the cooling creates edge stresses of at least 4 MPa, or preferably at least 8 MPa, in the glass.

16. The method as claimed in any of the preceding method claims, **characterized in that** the glass comprises one or more glass sheets, the thickness of each glass sheet being in the range from 0.5 to 6 mm, notably from 2.5 to 4.5 mm.

17. The method as claimed in any of the preceding method claims, **characterized in that** the flat glass before bending has a larger
main face dimension of more than 2400 mm and a smaller main face dimension of more than 1600 mm.

18. The method as claimed in any of the preceding method claims, **characterized in that** the final bent glass has, in projection on a plane, a larger main face dimension of more than 2200 mm and a smaller main face dimension of more than 1500 mm.

19. The method as claimed in any of the preceding method claims, **characterized in that** the final bent glass has a deflection of more than 250 mm, or even more than 280 mm, or even more than 300 mm, and a double bend of more than 80 mm, or even more than 90 mm, or even more than 100 mm.

20. The method as claimed in the preceding claim, **characterized in that** the extension is retracted after the start of the cooling.
